(19) Europäisches Patentamt

European Patent Office

Office européen des brevets

(11) Publication number : **0 243 558 B1**

(12) **EUROPEAN PATENT SPECIFICATION**

(45) Date of publication of patent specification :
30.01.91 Bulletin 91/05

(51) Int. Cl.⁵ : **B60C 15/06**, B60C 9/02

(21) Application number : 86400853.7

(22) Date of filing : 21.04.86

(54) Heavy duty pneumatic radial tire.

(43) Date of publication of application :
04.11.87 Bulletin 87/45

(45) Publication of the grant of the patent :
30.01.91 Bulletin 91/05

(84) Designated Contracting States :
DE FR GB

(56) References cited :
FR-A- 2 224 313
FR-A- 2 267 211
FR-A- 2 385 546
US-A- 3 253 636
US-A- 4 019 551

(73) Proprietor : **SUMITOMO RUBBER INDUSTRIES LIMITED**
No. 1-1, Tsutsui-cho 1-chome
Chuo-ku Kobe-shi Hyogo 651 (JP)

(72) Inventor : Iuchi, Munenori
1, Minatojima Nakamachi 3-chome
Chuo-ku Kobe-shi Hyogo-ken (JP)

(74) Representative : Descourtieux, Philippe et al
CABINET BEAU de LOMENIE 55 rue
d'Amsterdam
F-75008 Paris (FR)

## Description

## BACKGROUND OF THE INVENTION

Field of the invention

The present invention relates to an improvement of a structure for reinforcing bead sections of radial tires provided with carcass ply composed of steel cords, particularly radial tire for heavy duty vehicles such as trucks and buses etc.

Description of the Prior Art

In vehicles of this type, bias tires have been primarily used. Lately, there have been used radial tires each having a rigid reinforcement at its tread portion, particularly a belt reinforcement composed of metal cords such as steel cords or the like.

In general, radial tires using metal cords as a belt reinforcement have several merits such as wear resistance punture resistance and the like as compared with the usual bias tires. This is because a stiff belt is disposed between the tread rubber and the carcass ply, but this belt may have adverse effect on the ride of the vehicle due to the rigid reinforcing effect width the belt.

Therefore, the development of such radial tires are particularly advanced for use on good roads as opposed to poorer roads. Lately, the demand for these tires is conspicuous with the remarkable improvement of roads such as the development of the express way networks and the like.

Radial tires are often build wherein cords of carcass plies are wrapped around a bead core from the inside to the outside of tires and are arranged in radial direction of a tire or semiradial tires wherein the cords of carcass plies are inclined at an angle of 10° to 30° with respect to the radial direction.

Such a steel cord reinforcing layer is secured at least near the bead portion and extended upwardly from at least near the bead base portion to a given height in a radial direction, has a weak resistance to the lateral force acting on the tire. As a result, the flexible sidewall portion produces a discontinuity of rigidity near the radially outer end of the steel cord reinforcing layer which has a very high rigidity, so that when the tire is deformed under a load, peeling of the steel cord reinforcing layer and the turned up portion of the carcass ply may occur at the discontinuous area of the rigidity. Such a problem will grow and is liable to cause a separation failure of the steel cord end, which is a fatal defect in a radial tire of this type.

In order to solve this problem, there has hitherto been proposed a method of arranging an additional organic fiber cord layer outside or inside a position corresponding to the radially outer end of the steel cord reinforcing layer and the like with respect to the axial direction of tire. Two typical embodiments of the said prior art will be explained in detail as follows.

One of them (Japanese Patent N° 967.452) is characterized in that a steel cord reinforcing layer is disposed at the outside of the turned up portion of the said carcass ply and reinforcing fiber layers wherein two or more layers composed of rubberized organic fiber cords are crossed with each other, are arranged at the outside of the steel cord reinforcing layer and extend upwardly from the bead base up to the position at width of the tire cross section is at a maximum. The cut ends of the turned-up portion of the carcass ply are completely covered with the above mentioned reinforcing layers and a rubber layer composed of a hard rubber stock with JIS hardness greater than 80° and a relatively soft rubber with JIS hardness of about 50° to 60° is disposed above a bead core. This layer is positioned between the carcass main portion and the turned-up portion of the carcass ply and the reinforcing organic fiber cord layer with the rubber layer gradually decreasing the thickness towards the side wall of the tire and a substantially triangular bead section is formed.

The other such example (US-A- 3 557 860) discloses a pneumatic radial tire, in which the beads comprise at least a pair of bead core of steel wires about which the carcass plies are turned up, said carcass plies being all turned up towards the side directed towards the rim flange, and including a triangular filler made of the high rigidity rubber layer or the like above bead core, and reinforcing elements constituted by two groups of strips of cord fabric, each group being constituted by one or more strips, the first group being placed inwardly of the bead, betwwen the carcass plies and the triangular filler, and the second group being placed outwardly of the bead and of the carcass plies and alongside the turned-up portion of said plies, said groups of strips extending radially from a point approximately at the height of the inner periphery of the bead ring to at least one-sixth of the height of the tire section.

The tires constructed as above described have been favorably accepted by drivers as a tire which can be used under severe and heavy load condition.

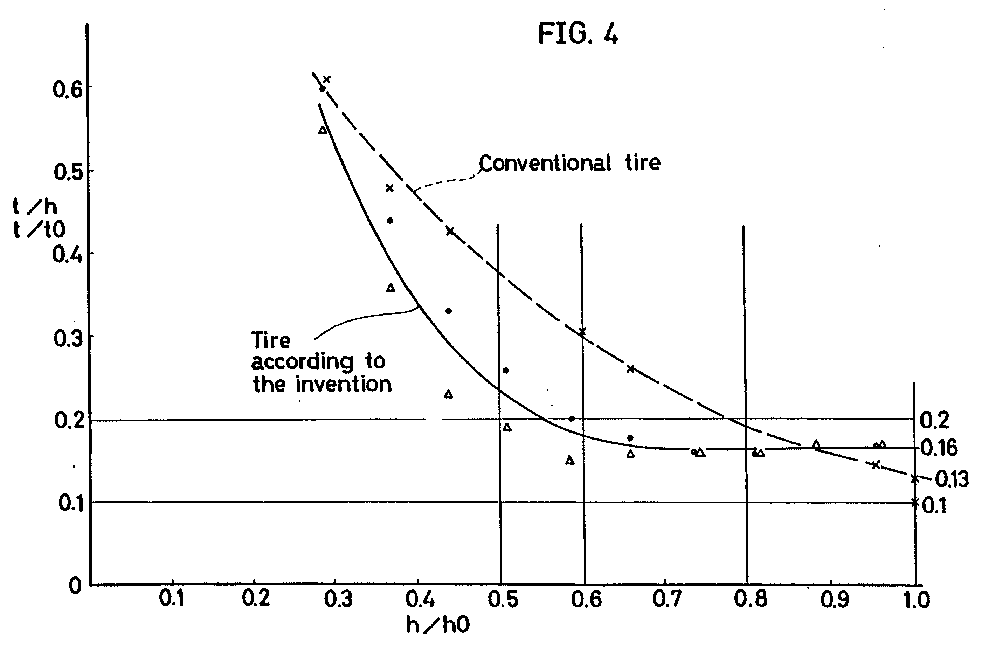

Recently, some drivers have begun to use such tires under more even severe conditions due to economic conditions such that as a result, bead separation failure is sometimes induced. On the one hand, in order to substantially reduce the cost of tires, the rate of using steel cords radial tires as a recapped tire has increased. It has become the present tendency to recap a worn tire two or three times. Under such circumstances, it is vigorously desired to eliminate bead separation failure which is vital to preserving a recapable tire carcass, and hense it is desirable to provide highly durable reinforced bead constructions, but the premature failure due to the aforementioned peeling phenomenon are not yet solved even by these proposals. A tire according to the preamble of claim is known (see e.g. Fig. 3 of the drawings).

## Brief summary of the invention

An object of the present invention is to provide a pneumatic radial tire having an improved bead portion reinforcing construction which can effectively prevent the separation failure of the steel cord ends of the carcass ply turned-up portions and the steel cord reinforcing layer which are serious weakpoint in the radial tire. This object is achieved with a tire of the kind set forth by the features of the characterizing portion of claim 1.

## Brief description of the drawings

Figure 1 is a partially sectional view of the bead portion of one embodiment of the pneumatic radial tire for heavy vehicles according to the present invention ;
Figures 2 (a), (b), (c) are partially sectional views of other embodiments of the bead portion of a pneumatic radial tire for heavy vehicles according to the present invention ;
Figure 3 is a partially cross sectional view of a bead portion in a tire according to the prior art ; and
Figure 4 is a graph showing a relationship between h/ho and t/h of the tire according to the present invention and the conventional tire, respectively.

## Detailed description

Heretofore, the bead construction of radial tires wherein a carcass ply composed of steel cords is turned up around a pair of bead cores from the inside towards the outside with respect to the axial direction of the tire and a steel cord reinforcing layer is disposed on the outside of the turned up portion of said carcass ply has been widely adopted as a favorable durable bead construction for heavy duty radial tires as above mentioned. There are two turned up constructions of the bead portion of a caracass ply, one is what is called a high ply turned up construction wherein the perpendicular height of the radially outermost end of the turned up portion of carcass plies from the bead base is higher than that of the steel cord reinforcing layer, and the other is a low ply turned up construction wherein the said height of the outermost end of the turned up portion is lower than that of the steel cord reinforcing layer.

Under severe service conditions, the carcass ply tends to remove from bead cores due to the stretching stress repeated on the carcass ply every rotation of the tires. Therefore, in order to prevent the above removal of the carcass ply from the bead cores, the high ply turned up construction is used in radial tires for heavy duty vehicles.

However, the problem of separation failures in the bead section are not yet fully solved even by this kind of construction.

The inventor has found out from various experimental results that the separation failure of the bead portion is mainly caused by deformation of the bead portion during running under load, and has paid great attention to the deformation of the bead portion and found a far superior connection of the carcass ply and its turned-up portion with respect to the said deformation in the region of the bead to enable to suppress the deformation to a minimum extent at the upper end of the turned up portion by disposing the carcass ply and its turned up portion at a certain position, which is mentioned later, and finally accomplished this invention.

The following is the explanation of the radial tire for heavy duty vehicles according to one embodiment of the present invention.

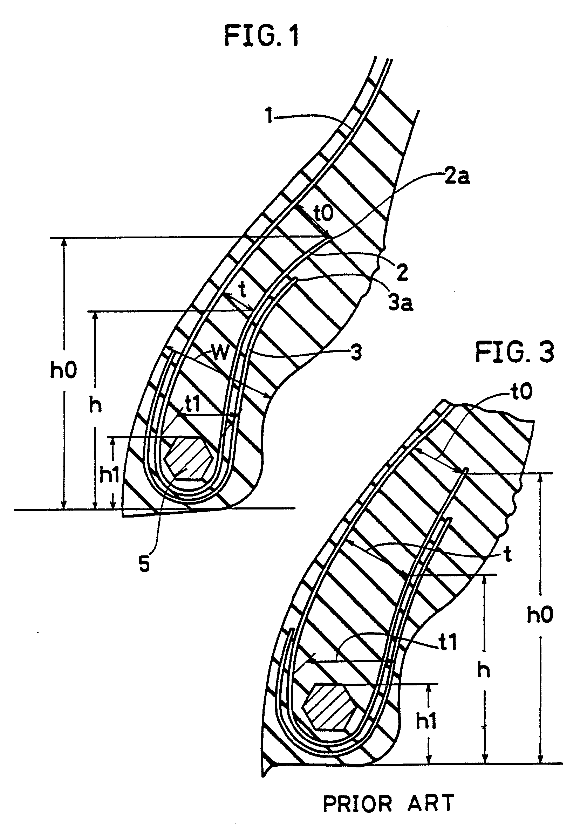

In Figure 1 is illustrated the carcass ply (1), which is turned up around the bead core (5) from the inside toward the outside. The steel cords composing the carcass ply are arranged at the angle of about 90° with respect to the equatorial line of the tire.

Steel cord reinforcing layer (3) is disposed at the outside of the turned-up portion (2) of the carcass ply (1) surrounding the whole of the bead core (5) from the inside toward the outside in the axial direction of the tire, and the radially outer end (3a) of the steel cord reinforcing layer (3) is located lower than the radially outer end (2a) of the turned-up portion (2), and the rubber thickness (t) between the carcass ply (1) and the turned-up portion of the carcass ply (2) from the upper side of bead core (5) to the direction toward the side wall portion is distributed as follows.

Namely, at the height (h) from the bead base portion, with regard to the minimum value of rubber thickness (t) between the carcass ply main portion and the turned-up portion (2), the ratio t/h of the rubber thickness t to the height h at the said certain height h is to decrease gradually in the direction of the side wall. In addition, when the ratio h/ho of said height h to the height ho of the radially outer end (2a) of the turned-up portion (2) from the bead base is within the range from a boundery comprised between 0.5 and 0.8 to 1.0, the ratio t/h takes an approximate definite value within a range of between 0.1 and 0.25.

In this way, said rubber thickness t itself decreases gradually from the upper part of the bead core (5) to the position at which the ratio h/ho reaches said boundery and on the contrary it increases gradually where the ratio h/ho is over said boundery.

Heretofore, in the construction of the bead portion the said rubber thickness (t) tends to be constant or decreases gradually to the direction of the said wall portion. The present invention, on the other hand, is to construct the bead portion as above mentioned, so it is capable of efficiently eliminating shearing strain to yield between layers and compressive strain mainly yielded at the outside of the bead portion, that is at the side of the turned up portion of the carcass ply and tensile strain mainly yielded at the inside of the bead portion, that is, at the side of the carcass ply in portion.

Besides, the vertical height (ho) of the radially outer end (2a) of the turned-up portion of the carcass ply from the bead base portion is to be set within a range from 55 mm to 80 mm.

When the height (ho) is higher than 80 mm, the outermost end of the turned-up portion of the carcass ply is located in the flexible zone of the side wall, so the stress concentration on that end is apt to be induced, on the other hand, when height (ho) is lower than 55 mm, the reinforcement of the bead portion is not enough, which is apt to induce the carcass ply to slip from the bead core (5).

In the present invention the bead apex strip is disposed between the carcass ply main portion and it is turned up portion and extends from the upper part of the bead base to the side wall region.

The bead apex is preferably composed of the single layer of comparatively hard rubber strip whose JIS (Japanese Industrial Standard) hardness is, for instance, within a range from 55° to 95°, or a double layer in a combination of hard rubber and soft rubber, wherein hard rubber is disposed on the side of the bead core (5), while soft rubber is disposed on and adjacent to the hard rubber and extends toward the direction of the side wall. In both constructions, it is preferable that the radially outer end of the bead apex is disposed beyond the radially outer end (2a) of the turned up portion of the carcass ply.

The above mentioned reinforcing layer (3) composed of steel cords being arranged at an angle between 20° and 60° with respect to the equatorial direction of the tire is so disposed that it is cords cross each other in the case of where at least two plies are used as the reinforcing layer.

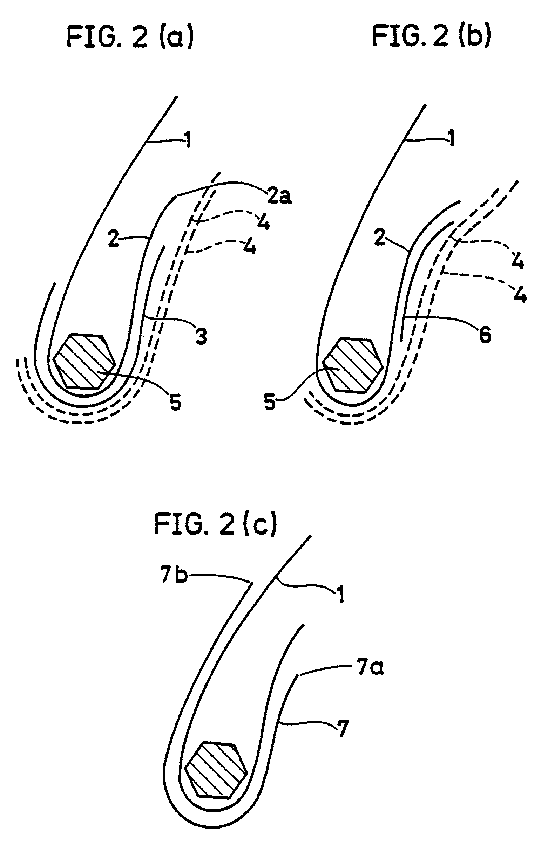

In Figure 2 (a), (b) and (c) is shown a schematic diagram of another embodiement of a radial tire according to the present invention. Figure 2 (a) shows that two additional reinforcing layer (4) composed of rubberized organic fiber cords are disposed adjacent and on the outside of the steel cord reinforcing layer and extend from the bead base portion to a position over the radially outermost end (2a) of the turned-up portion (2) of the carcass ply. These organic fiber cords may be nylon, polyester, rayon or aromatic polyamid fiber cord. This kind of construction enables one much more effectively to eliminate the strains at the upper end (2a) of the turned up portion (2). In Figure 2(b) is shown the steel cord reinforcing layer (6) being disposed from the axially outerside of the bead core to the position where is under the radially outermost end of the turned up portion without being turned up around the bead core (5).

Furthermore, in the Figure 2(c) is illustrated the steel cord reinforcing layer (7) wound up around the bead core with an inside end (7b) which is disposed higher than the outerside upper end (7a) of the steel cord reinforcing layer (7).

For confirmation of the effect of the present invention, as shown in table 1, the durability of the bead portion has been tested with one embodiment of a radial tire according to the present invention and a conventional one, which has a size of 10.00 R20 14PR radial tire for trucks and buses etc.

In examining the durability, the time when any damage of bead portions occurs is measured under the drum test condition of 3.000 kg load on a tire, a running speed of 40 km/h and an internal pressure of 8.0 kg/cm$^2$. Drum endurance tests have yielded the result as shown in Table 1 that the durability of the tire according to the present invention can be improved more than about 200 % relative to the conventional tire.

In figure 4 the relations of (h/ho) and (t/h) on the comparison of one embodiment of the present invention and a prior art tire is shown in more detail.

EP 0 243 558 B1

TABLE 1

| | Tire according to the present invention | Conventional tire |
|---|---|---|
| constructions | as shown in FIG.1 | as shown in FIG.3 |
| (1) the height of turnup end (ho) | 68 | 68 |
| t /h at 0.6 of h/ho | 0.18 | 0.30 |
| t /h at the upper part of bead core | 0.65 | 0.68 |
| to/ho at the upper end of the turnup portion | 0.16 | 0.13 |
| (2) the height of the reinforcing layer | 57 | 57 |
| (3) JIS hardness of bead apex in single layer | 86 | 86 |
| Drum endurance test results in index | 205 | 100 |

**Claims**

1. Heavy duty pneumatic radial ply tire, comprising :
a carcass having a pair of axially spaced circumferentially extending bead cores (5) and covered by rubber to define a tire bead seat adjacent each bead core ;
a carcass ply (1) having a plurality of steel cords (2) extending from bead-to-bead, with the ends of the cords being turned up around the bead core (5) from the axial inner to the axial outer sides thereof, the outermost end (2a) of the turned up portion being at a perpendicular height (ho) above its bead seat of 55 mm to 80 mm, the steel cords (2) of the carcass ply lying at an angle of 90° to 70° with respect to the equatorial plane of the tire ;
a circumferential extending belt on said carcass of a plurality of cords lying at an angle from 10° to 30° with respect to the equatorial plane of the tire ;
a reinforcing layer (3, 4, 7) in each bead region (5) comprising cords disposed adjacent to the outside of the turned up portion (2) of the carcass ply (1) ;
the minimum rubber thickness t between the carcass ply (1) and its turned up portion (2a) lying at a perpendicular height h above the tire bead seat ; and
the ratio t/h decreasing gradually in inverse proportion to the values h/ho between 0.3 and a boundery comprised between 0.5 and 0.8 characterized in that said ratio t/h takes an approximate constant value from 0.1 to 0.25 within the range of h/ho comprised between 1.0 and said boundery.

2. Tire according to claim 1, characterized in that the rubber radially outward of the bead core and between the carcass ply and its turned up portion is of a hardness within the range from 55° to 95° JIS.

3. Tire according to claim 2, characterized in that the hard rubber extends radially outwardly beyond the end (2a) of the turned up portion.

4. Tire according to claim 1, characterized in that the cords of the reinforcing layer (3) lies at an angle

5

between 20° and 60° with respect to the radial direction of the tire.

5. Tire according to claim 1, characterized in that the radial inner end (7b) of the reinforcing layer (7) is wrapped around the bead core (5).

6. Tire according to claim 1, characterized in that the radial inner end of the reinforcing layer (4) lies between the bead core and the bead seat of the tire (Fig. 2b).

7. Tire according to claim 1, characterized in that the radial outer end (3a) of the reinforcing layer (3) lies radially inwardly of the end of the carcass ply turned-up portion.

8. Tire according to claim 1, characterized in that the radial outer end of the reinforcing layer lies radially outwardly of the end of the carcass ply turned-up portion.

9. Tire according to claim 1, characterized in that the reinforcing layer comprises at least one layer of the steel cords (3).

10. Tire according to claim 1, characterized in that the reinforcing layer comprises at least one layer of organic fiber cords (4).

11. Tire according to claim 1, characterized in that the axial inner end (7b) of the reinforcing layer (7) lies at a greater radial distance above the bead core than the axial outer (7a) thereof (Fig. 2c).


## Ansprüche

1. Hochleistungsgürtelreifen, umfassend :

eine Karkasse, die zwei axial beabstandete, umfangsmäßig verlaufende Wulstkerne (5) hat und mit Gummi bezogen ist unter Bildung eines Reifenwulstsitzes angrenzend an jeden Wulstkern ;

eine Karkassen-Gewebeeinlage (1) mit einer Vielzahl von Stahlkordfäden (2), die von Wulst zu Wulst verlaufen, wobei die Enden der Kordfäden nach oben um den Wulstkern (5) herum von seiner in Axialrichtung inneren Seite zu seiner in Axialrichtung äußeren Seite gebogen sind, das äußerste Ende (2a) des nach oben gebogenen Abschnitts in senkrechter Richtung auf einer Höhe ho von 55 mm bis 80 mm über seinem Wultssitz liegt, und die Stahlkordfäden (2) der Karkassen-Gewebeeinlage unter einem Winkel von 90° bis 70° zur Äquatorialebene des Reifens liegen ;

einen umfangsmäßig verlaufenden Gürtel auf der Karkasse aus einer Vielzahl von Kordfäden, die unter einem Winkel von 10° bis 30° zur Äquatorialebene des Reifens liegen ;

eine Verstärkungslage (3, 4, 7) in jedem Wulstbereich (5), die Kordfäden umfaßt, die der Außenseite des nach oben gebogenen Abschnitts (2) der Karkassen-Gewebeeinlage (1) benachbart angeordnet sind;

wobei die geringste Gummidicke t zwischen der Karkassen-Gewebeeinlage (1) und ihrem nach oben gebogenen Abschnitt (2a) in senkrechter Richtung auf einer Höhe h über dem Reifenwulstsitz liegt ; und

das Verhältnis t/h umgekehrt proportional zu den Werten h/ho zwischen 0,3 und einem zwischen 0,5 und 0,8 liegenden Grenzwert allmählich abnimmt, **dadurch gekennzeichnet,**

daß das Verhältnis t/h einen ungefähren Konstantwert von 0,1 bis 0,25 in dem Bereich von h/ho annimmt, der zwischen 1,0 und dem Grenzwert liegt.

2. Reifen nach Anspruch 1, dadurch gekennzeichnet, daß der radial außerhalb des Wulstkerns und zwischen der Karkassen-Gewebeeinlage und ihrem nach oben gebogenen Abschnitt befindliche Gummi eine Härte im Bereich von 55° bis 95° JIS hat.

3. Reifen nach Anspruch 2, dadurch gekennzeichnet, daß der Hartgummi nach radial außen über das Ende (2a) des nach oben gebogenen Abschnitts hinaus verläuft.

4. Reifen nach Anspruch 1, dadurch gekennzeichnet, daß die Kordfäden der Verstärkungslage (3) unter einem Winkel zwischen 20° und 60° zur Radialrichtung des Reifens liegen.

5. Reifen nach Anspruch 1, dadurch gekennzeichnet, daß das radial innere Ende (7b) der Verstärkungslage (7) um den Wulstkern (5) herum gewickelt ist.

6. Reifen nach Anspruch 1, dadurch gekennzeichnet, daß das radial innere Ende der Verstärkungslage (4) zwischen dem Wulstkern und dem Wulstsitz des Reifens liegt (Fig. 2b).

7. Reifen nach Anspruch 1, dadurch gekennzeichnet, daß das radial äußere Ende (3a) der Verstärkungslage (3) radial innerhalb des Endes des nach oben gebogenen Abschnitts der Karkassen-Gewebeeinlage liegt.

8. Reifen nach Anspruch 1, dadurch gekennzeichnet, daß das radial äußere Ende der Verstärkungslage radial außerhalb des Endes des nach oben gebogenen Abschnitts der Karkassen-Gewebeeinlage liegt.

9. Reifen nach Anspruch 1, dadurch gekennzeichnet, daß die Verstärkungslage wenigstens eine Lage aus den Stahlkordfäden (3) umfaßt.

10. Reifen nach Anspruch 1, dadurch gekennzeichnet, daß die Verstärkungslage wenigstens eine Lage aus organischen Faserkordfäden (4) umfaßt.

11. Reifen nach Anspruch 1, dadurch gekennzeichnet, daß das axial innere Ende (7b) der Verstärkungslage (7) in einem größeren radialen Abstand über dem Wulstkern als ihr axial äußeres Ende (7a) liegt (Fig. 2c).

## Revendications

1. Pneumatique radial pour conditions de service extrêmes, comprenant :
une carcasse comportant une paire de tringles de talon (5) distantes axialement, qui s'étendent sur la circonférence et qui sont recouvertes par du caoutchouc pour définir une portée de talon adjacente à chaque tringle de talon ;
une nappe de carcasse (1) comportant une pluralité de câbles d'acier (2) qui s'étendent d'un talon à l'autre, les extrémités des câbles étant relevées autour de la tringle de talon (5) depuis son côté axialement interne jusqu'à son côté axialement externe, l'extrémité externe (2a) de la partie relevée étant à une hauteur perpendiculaire ho au-dessus de sa portée de talon de 55 mm à 80 mm, les câbles d'acier (2) de la nappe de carcasse étant situés sous un angle de 90° à 70° par rapport au plan équatorial du pneumatique ;
une ceinture, qui s'étend sur la circonférence sur ladite carcasse, d'une pluralité de câbles situés sous un angle de 10° à 30° par rapport au plan équatorial du pneumatique ;
une couche de renforcement (3, 4,7) dans chaque région de talon (5) comprenant des câbles disposés de façon adjacente à l'extérieur de la partie relevée (2) de la nappe de carcasse (1) ;
l'épaisseur minimale t de caoutchouc entre la nappe de carcasse (1) et sa partie relevée (2a) étant située à une hauteur perpendiculaire h au-dessus de la portée du talon ; et
le rapport t/h décroissant progressivement de façon inversement proportionnelle aux valeurs h/ho situées entre 0,3 et une limite comprise entre 0,5 et 0,8, caractérisé en ce que ledit rapport t/h prend une valeur approximativement constante de 0,1 à 0,25 dans la plage de h/ho comprise entre 1,0 et ladite limite.

2. Pneumatique selon la revendication 1, caractérisé en ce que le caoutchouc situé radialement à l'extérieur de la tringle de talon et entre la nappe de carcasse et sa partie relevée est d'une dureté comprise dans la gamme de 55° à 95° JIS.

3. Pneumatique selon la revendication 2, caractérisé en ce que le caoutchouc dur s'étend radialement à l'extérieur au-delà de l'extrémité (2a) de la partie relevée.

4. Pneumatique selon la revendication 1, caractérisé en ce que les câbles de la couche de renforcement (3) sont situés à un angle compris entre 20° et 60° par rapport à la direction radiale du pneumatique.

5. Pneumatique selon la revendication 1, caractérisé en ce que l'extrémité interne radiale (7b) de la couche de renforcement (7) entoure la tringle de talon (5).

6. Pneumatique selon la revendication 1, caractérisé en ce que l'extrémité interne radiale de la couche de renforcement (4) est située entre la tringle de talon et la portée du talon du pneumatique (figure 2b).

7. Pneumatique selon la revendication 1, caractérisé en ce que l'extrémité externe radiale (3a) de la couche de renforcement (3) est située radialement à l'intérieur de l'extrémité de la partie relevée de la nappe de carcasse.

8. Pneumatique selon la revendication 1, caractérisé en ce que l'extrémité externe radiale de la couche de renforcement est située radialement à l'extérieur de l'extrémité de la partie relevée de la nappe de carcasse.

9. Pneumatique selon la revendication 1, caractérisé en ce que la couche de renforcement comprend au moins une couche de câbles d'acier (3).

10. Pneumatique selon la revendication 1, caractérisé en ce que la couche de renforcement comprend au moins une couche de câbles de fibres organiques (4).

11. Pneumatique selon la revendication 1, caractérisé en ce que l'extrémité interne axiale (7b) de la couche de renforcement (7) est située à une plus grande distance radiale au-dessus de la tringle de talon que son extrémité externe axiale (7a) (figure 2c).

# FIG. 1

# FIG. 3

PRIOR ART

# FIG. 2 (a)

# FIG. 2 (b)

# FIG. 2 (c)

FIG. 4